# EUROPEAN PATENT APPLICATION

(11) **EP 4 764 879 A1**
(43) Date of publication of application: **24.06.2026**
(21) Application number: 24883544.9
(22) Date of filing: 23.12.2024
(51) Int. Cl.: G06F 15/78

(54) **CHIP MANAGEMENT NETWORK CONFIGURATION METHOD, CHIP MANAGEMENT NETWORK SYSTEM, COMPUTING DEVICE, STORAGE MEDIUM AND COMPUTER PROGRAM PRODUCT**

(30) Priority: 12.10.2024 CN 202411425746
(71) Applicant: Hygon Information Technology Co., Ltd., Tianjin 300392 (CN)
(72) Inventor: XU, Xiangjun, Tianjin 300392 (CN)
(74) Representative: Maiwald GmbH
(86) International application number: PCT/CN2024/141402
(87) International publication number: WO 2026/076830

(57) **Abstract**

Embodiments of the present disclosure provide a chip management network configuration method, a chip management network configuration system, a computing device, a storage medium and a computer program product, which are applied to a target chip. The target chip includes a plurality of chiplets of different types, and a chiplet of the plurality of chiplets includes one or more modules and is configured with a management network configuration serial number, the management network configuration serial number is obtained by configuration based on a type of the chiplet and a packaging position of the chiplet in the target chip; and the method includes: acquiring architecture information of the target chip, where the architecture information includes at least the management network configuration serial number configured for the chiplet; partitioning a preset address space into a plurality of sub-configuration spaces according to the architecture information of the target chip; and according to the management network configuration serial number, in the plurality of sub-configuration spaces, allocating a corresponding sub-configuration space for the target chip and each chiplet in the target chip, where sub-configuration spaces allocated for modules included in each chiplet are different.

## Description

The present application claims priority of the Chinese Patent Application No. 202411425746.7 filed on October 12, 2024, the disclosure of which is incorporated herein by reference in its entirety as part of the present application.

### TECHNICAL FIELD

Embodiments of the present disclosure relates to a chip management network configuration method, a chip management network configuration system, a computing device, a storage medium and a computer program product.

### BACKGROUND

A chiplet is a unit chip that is able to realize certain functionality and includes an interconnection interface. A plurality of chiplets can be packaged by techniques such as 2D, 2.5D, and 3D to obtain a chiplet group, and interconnection and intercommunication of different chiplets are realized based on interconnection interfaces so as to form a chip having expected functionality, e.g., a system on chip (SOC).

When designing a chip, chips of different specifications can be obtained by adjusting the quantity of chiplets in a chiplet group. Moreover, in addition to determining the information of the chiplet group constituting the chip, a management network needs to be configured. The management network is connected to modules, for which address space configuration and management are required, in the chiplet. The chip may manage each module in the chiplet through the management network, and each module may also report contents such as interruption and error information through the management network. It can be seen that the management network configuration of the chip is of great significance for realizing network connection and dynamic interaction between the chiplets and achieving the expected functionality of the chip.

However, the chip that is obtained by configuration of a chip management network configuration method has a high requirement on the adaptability of software.

### SUMMARY

Accordingly, the embodiments of the present disclosure provide a chip management network configuration method, a chip management network configuration system, a computing device, a storage medium and a computer program product, so as to reduce the requirements for software adaptation.

In the first aspect, an embodiment of the present disclosure provides a chip management network configuration method, which is applied to a target chip. The target chip includes a plurality of chiplets of different types, and a chiplet of the plurality of chiplets includes one or more modules and is configured with a management network configuration serial number, the management network configuration serial number is obtained by configuration based on a type of the chiplet and a packaging position of the chiplet in the target chip, and the method includes:
acquiring architecture information of the target chip, where the architecture information includes at least the management network configuration serial number configured for the chiplet;
partitioning a preset address space into a plurality of sub-configuration spaces according to the architecture information of the target chip; and
according to the management network configuration serial number, in the plurality of sub-configuration spaces, allocating a corresponding sub-configuration space for the target chip and each chiplet in the target chip, where sub-configuration spaces allocated for modules included in each chiplet are different.

Optionally, the partitioning a preset address space into a plurality of sub-configuration spaces according to the architecture information of the target chip, includes: according to the architecture information of the target chip, partitioning the preset address space into a plurality of sub-configuration spaces that meet a preset rule, where the preset rule is associated with an address space of each chiplet in the target chip.

Optionally, the preset rule includes:
chiplets of different types correspond to different address spaces, and modules included in a chiplet correspond to different address spaces.

Optionally, the architecture information of the target chip further includes a type of the target chip; and
the according to the architecture information of the target chip, partitioning the preset address space into a plurality of sub-configuration spaces that meet a preset rule, includes:
partitioning the preset address space into a plurality of configuration spaces according to the type of the target chip, where different configuration spaces correspond to different functionality implementations of the target chip; and
according to a quantity of cores of the target chip, a type and a quantity of chiplets constituting the target chip, and a quantity and a functionality of modules included in each chiplet in the target chip, partitioning a corresponding configuration space into the plurality of sub-configuration spaces.

Optionally, the plurality of configuration spaces include at least a core configuration space, a system management configuration space, and an IO management configuration space;
the core configuration space corresponds to core task execution of the target chip; the system management configuration space corresponds to state control of the target chip; and the IO management configuration space corresponds to information interaction of the target chip.

Optionally, the sub-configuration spaces include a sub-core configuration space, a sub-system configuration space, and a sub-IO configuration space;
the according to a quantity of cores of the target chip, a type and a quantity of chiplets constituting the target chip, and a quantity and a functionality of modules included in each chiplet in the target chip, partitioning a corresponding configuration space into the plurality of sub-configuration spaces, includes:
according to the quantity of cores of the target chip, partitioning the core configuration space into a plurality of corresponding sub-core configuration spaces, where a quantity of the partitioned sub-core configuration spaces is greater than or equal to the quantity of cores of the target chip;
according to the type and the quantity of the chiplets constituting the target chip, partitioning the system management configuration space into a plurality of corresponding sub-system configuration spaces, where a quantity of the partitioned sub-system configuration spaces is greater than or equal to a quantity of chiplets included in the target chip; and
according to the quantity and the functionality of the modules included in each chiplet in the target chip, partitioning the IO management configuration space into a plurality of corresponding sub-IO configuration spaces, where a quantity of the partitioned sub-IO configuration spaces is greater than or equal to a sum of the quantity of the modules included in each chiplet in the target chip.

Optionally, the according to the management network configuration serial number, in the plurality of sub-configuration spaces, allocating a corresponding sub-configuration space for the target chip and each chiplet in the target chip, includes:
according to the management network configuration serial numbers, in the plurality of sub-core configuration spaces, allocating the sub-core configuration spaces for the target chip based on the quantity of cores of the target chip;
in the plurality of sub-system configuration spaces, allocating the sub-system configuration spaces for the chiplet of the target chip based on the type and the quantity of the chiplets of the target chip; and
in the plurality of sub-IO configuration spaces, allocating the sub-IO configuration spaces for the modules included in each chiplet based on the quantity and the functionality of the modules included in each chiplet in the target chip.

Optionally, the configuration spaces further include a reserved address space, and the reserved address space is used to adapt to address extension requirements of target chips of different specifications, or meet different address extension requirements of the target chip.

Optionally, the architecture information of the target chip further includes a routing table corresponding to the target chip, the routing table is configured to indicate routing information of routing units in the target chip, and the routing information is used to formulate a data transmission path corresponding to the modules included in each chiplet in the target chip; and
while according to the management network configuration serial number, in the plurality of sub-configuration spaces, allocating a corresponding sub-configuration space for the target chip and each chiplet in the target chip, the method further includes:
according to the management network configuration serial number, in the routing table, allocating a corresponding routing unit for the modules included in each chiplet in the target chip.

Optionally, the target chip further includes interface units configured corresponding to the modules included in each chiplet; the interface units are configured for communication maintenance of corresponding modules; and
while according to the management network configuration serial number, in the routing table, allocating a corresponding routing unit for the modules included in each chiplet in the target chip, the method further includes: allocating a corresponding interface unit for the modules included in each chiplet in the target chi.

Optionally, the target chip further includes relay units configured for each chiplet in the target chip; the relay units are configured for signal transmission between a chiplet and a peer chiplet; and
while according to the management network configuration serial number, in the routing table, allocating a corresponding routing unit for the modules included in each chiplet in the target chip, the method further includes: allocating a corresponding relay unit for the modules included in each chiplet in the target chip.

In the second aspect, an embodiment of the present disclosure provides a chip management network system, which is applied to a target chip. The target chip includes a plurality of chiplets of different types, and a chiplet of the plurality of chiplets includes one or more modules and is configured with a management network configuration serial number, the management network configuration serial number is obtained by configuration based on a type of the chiplet and a packaging position of the chiplet in the target chip; and the chip management network system includes an acquiring module and a configuration module.

The acquiring module is configured to acquire architecture information of the target chip, where the architecture information includes at least the management network configuration serial number configured for the chiplet.

The configuration module is configured to partition a preset address space into a plurality of sub-configuration spaces according to the architecture information of the target chip, and according to the management network configuration serial number, in the plurality of sub-configuration spaces, allocate a corresponding sub-configuration space for the target chip and each chiplet in the target chip, where sub-configuration spaces allocated for modules included in each chiplet are different.

In the third aspect, an embodiment of the present disclosure provides a computing device, which includes the chip management network system according to the first aspect.

In the fourth aspect, an embodiment of the present disclosure provides a storage medium. The storage medium stores one or more computer executable instructions which, when executed, implement the chip management network configuration method according to the first aspect.

In the fifth aspect, an embodiment of the present disclosure provides a computer program product, which includes one or more computer executable instructions. When the one or more computer executable instructions are executed, implement the chip management network configuration method according to the first aspect.

In the chip management network configuration method, the chip management network configuration system and related device provided in the embodiments of the present disclosure, chip management network configuration method includes: acquiring architecture information of the target chip, where the architecture information includes at least the management network configuration serial number configured for the chiplet; then partitioning a preset address space into a plurality of sub-configuration spaces according to the architecture information of the target chip; and according to the management network configuration serial number, in the plurality of sub-configuration spaces, allocating a corresponding sub-configuration space for the target chip and each chiplet in the target chip, where sub-configuration spaces allocated for modules included in each chiplet are different.

It can be seen that, in an embodiment of the present disclosure, in a plurality of sub-configuration spaces into which a preset address space is partitioned, a corresponding sub-configuration space is allocated for a chiplet, so that a plurality of chiplets in a target chip share the preset address space, and thus, the preset address space can be applied to the chiplet group that has different types of chiplets. Meanwhile, on the basis that the sub-configuration spaces allocated for modules included in the chiplets are different, the preset address space of the present disclosure can also be applied to the chiplet group that has different specifications of chiplets, e.g., a chiplet group constituting a 32-core CPU or a chiplet group constituting a 64-core CPU. Thus, the preset address space in the embodiments of the present disclosure can be understood as a shared and uniformly configured address space, which is provided by a software system for the chiplets in the chiplet group. Accordingly, there is no need to match address spaces with the chiplets in the chiplet group based on specific software, so that the applicability of the present disclosure is improved and the requirement of the target chip on the adaptability of software is reduced.

### BRIEF DESCRIPTION OF DRAWINGS

In order to more clearly illustrate the technical solutions in the embodiments of the present disclosure, the drawings required in the description of the embodiments will be briefly introduced below. It is obvious that the drawings described below are only embodiments of the present disclosure, and for those skilled in the art, other drawings can also be obtained according to the drawings provided without creative labor.
Fig. 1 is a schematic diagram of an optional structure of a chip;
Fig. 2 and Fig. 3 are schematic diagrams of an optional architecture of a CPU chip composed of a plurality of chiplets;
Fig. 4 is a schematic diagram of module address space configuration of a chiplet including 16 modules;
Fig. 5 is a schematic diagram of module route configuration of a chiplet including 16 modules;
Fig. 6 is a schematic diagram of an internal structure of a CPU chip 1;
Fig. 7 is a schematic diagram of an internal structure of a CPU chip 2;
Fig. 8 is an optional flowchart diagram of a chip management network configuration method provided by an embodiment of the present disclosure;
Fig. 9 is another optional flowchart diagram of a chip management network configuration method provided by an embodiment of the present disclosure;
Fig. 10 is a schematic diagram of an internal structure of a chiplet provided by an embodiment of the present disclosure;
Fig. 11 is a schematic diagram of an interconnection structure of different chiplets provided by an embodiment of the present disclosure;
Fig. 12 is a schematic diagram of an optional internal structure of a 32-core CPU chip provided by an embodiment of the present disclosure;
Fig. 13 is a schematic diagram of an optional internal structure of a 64-core CPU chip provided by an embodiment of the present disclosure;
Fig. 14 is a schematic diagram of division of a 64 MB preset address space provided by an embodiment of the present disclosure; and
Fig. 15 is a schematic diagram of an optional structure of a chip management network system provided by an embodiment of the present disclosure.

### DETAILED DESCRIPTION

The technical solutions in the embodiments of the present disclosure will be clearly and completely described below in conjunction with the drawings in the embodiments of the present disclosure. It is obvious that the embodiments described are only part of the embodiments of the present disclosure, not all embodiments. Based on the embodiments in the present disclosure, all other embodiments obtained by a person skilled in the art without creative labor fall within the scope of protection of the present disclosure.

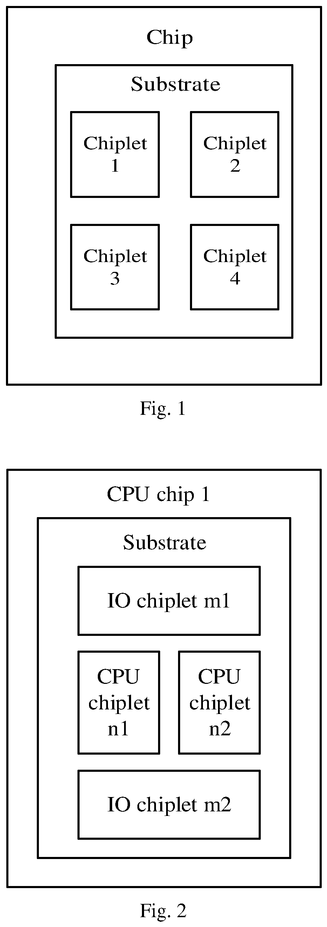

For ease of understanding the constitution of a chip, Fig. 1 exemplarily illustrates a schematic diagram of an optional structure of a chip. As shown in Fig. 1, the chip may include a plurality of chiplets (a chiplet 1, a chiplet 2, a chiplet 3, and a chiplet 4 are shown as an example in Fig.1). The chiplet 1, the chiplet 2, the chiplet 3 and the chiplet 4 may be of the same type and have the same functionality, or may be of different types and have different functionalities. The chiplet 1, the chiplet 2, the chiplet 3 and the chiplet 4 are packaged and integrated through a substrate to obtain the chip shown in Fig. 1.

It needs to be explained that at the chip design stage, the overall architecture of the chip may be split according to different computing units or functional units required to achieve the expected functionality of the chip. One or more chiplets corresponding to different computing units or functional units are designed according to the architecture splitting scheme of the chip, and one or more chiplets are interconnected and packaged together as a whole for implementing the expected functionality of the chip. Since a chiplet is a unit chip that is able to implement certain functionality and includes an interconnection interface, a plurality of chiplets constituting the same computing unit or functional unit can be called a chiplet group. The plurality of chiplets in the chiplet group may be the same or different. Moreover, based on intercommunication between different modules, the chiplets in the same chiplet group may also be used to constitute a different chiplet group. Furthermore, with the continuous development of the semiconductor technology, a single chiplet may include various functional blocks, thus achieving effects such as computing. Therefore, in some specific scenarios, the single chiplet may be regarded as a special chiplet group.

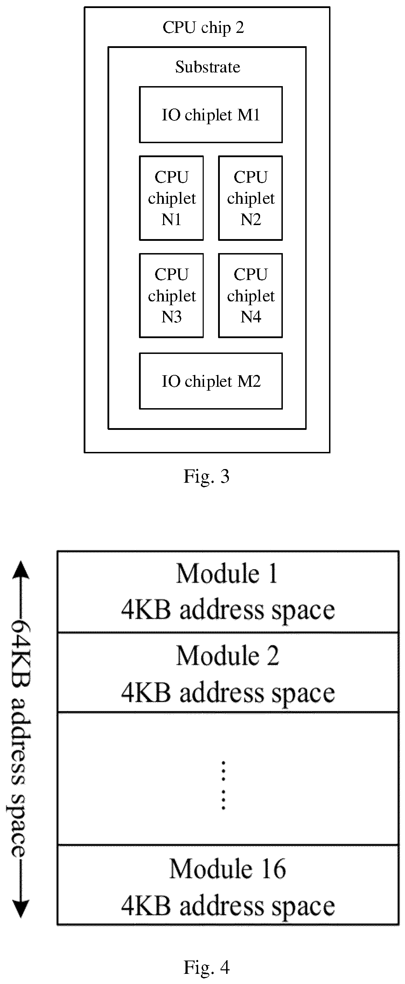

In an optional example, taking a CPU chip as an example, Fig. 2 and Fig. 3 illustrate schematic diagrams of optional architectures of different CPU chips composed of a plurality of chiplets. Fig. 2 shows a CPU chip 1 that has 32 cores, and Fig. 3 shows a CPU chip 2 that has 64 cores.

As shown in Fig. 2, the 32-core CPU chip 1 may include 2 IO chiplets (IO chiplet m1 and IO chiplet m2, respectively) and 2 CPU chiplets (CPU chiplet n1 and CPU chiplet n2, respectively). The 2 IO chiplets and the 2 CPU chiplets may be regarded as a chip group, e.g., the chip group A. The 2 IO chiplets are configured for input/output (I/O) tasks; and the 2 CPU chiplets are configured to implement 32-core channels of the CPU.

As shown in Fig. 3, the 64-core CPU chip 2 may include 2 IO chiplets (IO chiplet M1 and IO chiplet M2, respectively) and 4 CPU chiplets (CPU chiplet N1, CPU chiplet N2, CPU chiplet N3, and CPU chiplet N4, respectively). The 2 IO chiplets and the 4 CPU chiplets may be regarded as a chip group, e.g., the chip group B. The 2 IO chiplets are configured for input/output (I/O) tasks; and the 4 CPU chiplets are configured to implement 64-core channels of the CPU.

After the information of the chiplet group constituting the chip (e.g., types of chiplets and quantities of the types of chiplets included in the CPU chip shown in Fig. 2 or Fig. 3) is determined, the management network needs to be configured. The management network is connected to modules, for which address space configuration and management are required, in the chiplet. The chip may manage the modules in the chiplet through the management network, and the modules may also report interruption and error information and the like to the CPU through the management network. Thus, network connection and dynamic interaction between the chiplets can be implemented, thus achieving the expected functionality of the chip.

It needs to be further explained that since each chiplet in the chiplet group can be served as a unit chip, the configuration space of each chiplet can be designed independently. Therefore, in order to achieve the full chip functionality of the chiplet group, the management networks (i.e., control buses) of the chiplets in the chiplet group are interconnected between the chiplets through an inter-chip interconnection technique. The interconnected management networks in the chiplet group can be regarded as a complete chip management network. The content of chip management network configuration includes management address space configuration, data route configuration, permission and priority configuration, etc.

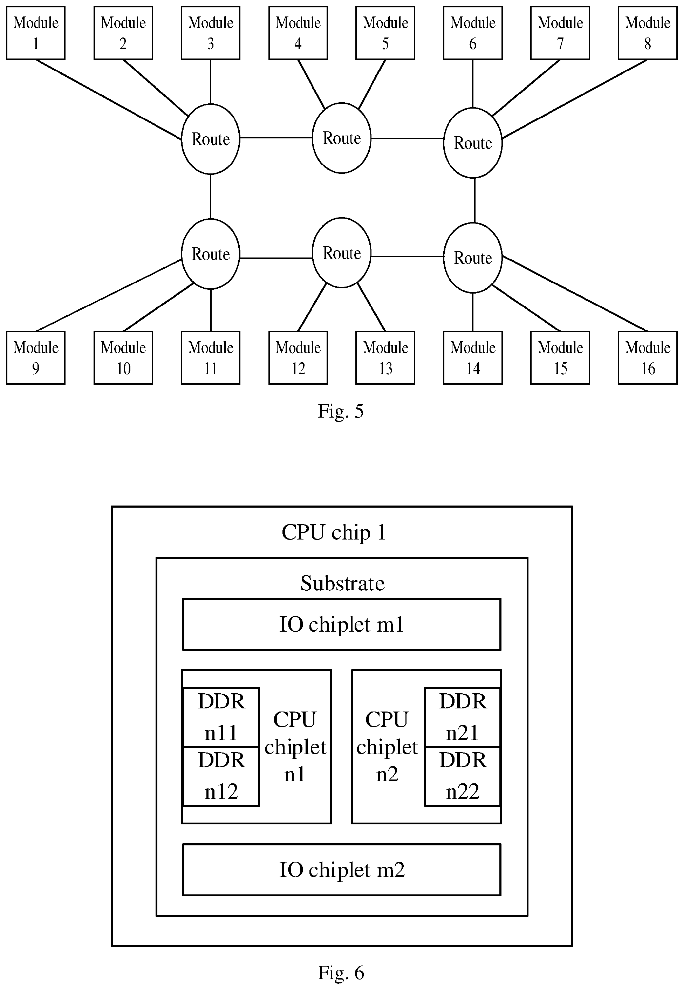

As an optional implementation, when management network configuration is performed, based on the independent design of the configuration space of a chiplet, a fixed address space allocation and a fixed route may be used for the chiplet, i.e., the address space allocation and the route in each chiplet are both predesigned by the manufacturer based on hardware specifications and are fixed. The management network configuration is explained by taking a chiplet including 16 modules as an example. As shown in Fig. 4 and Fig. 5, Fig. 4 is a schematic diagram of module address space configuration of the chiplet, and Fig. 5 is a schematic diagram of module route configuration of the chiplet. A management network configuration space corresponding to the chiplet including 16 modules is a 16-bit address space. The module 1 to the module 16 are configured to occupy a 4 KB address space respectively, and the address spaces of the modules do not overlap. Moreover, while the address spaces of the 16 modules of the chiplet are configured, routes in the management network may also be configured correspondingly. Corresponding routes are configured for the modules to formulate information transmission paths of the modules. The configured routes make up a routing table. The configured routes may be static or dynamic according to design requirements. The route configuration manner may be, for example, source routing, distributed routing, etc.

Therefore, when management network configuration is performed for a chip in units of a single chiplet, for chips of different specifications obtained by packaging chiplet groups with different quantities of chiplets, even though the internal configurations (e.g., controllers) of the chips are the same, the chips will also be designed to have different configuration spaces, thereby reducing the flexibility of the chips in later use and development. In other word, different chiplets are correspondingly configured with configuration spaces that belong exclusively to the respective chiplets and are adaptive to the types and specifications of the respective chiplets, such that the chips established in such a manner need to be configured with software adaptive to configuration spaces of chiplets therein. That is, chips of different specifications require different software systems to match them, and have a high requirement on the adaptability of the software.

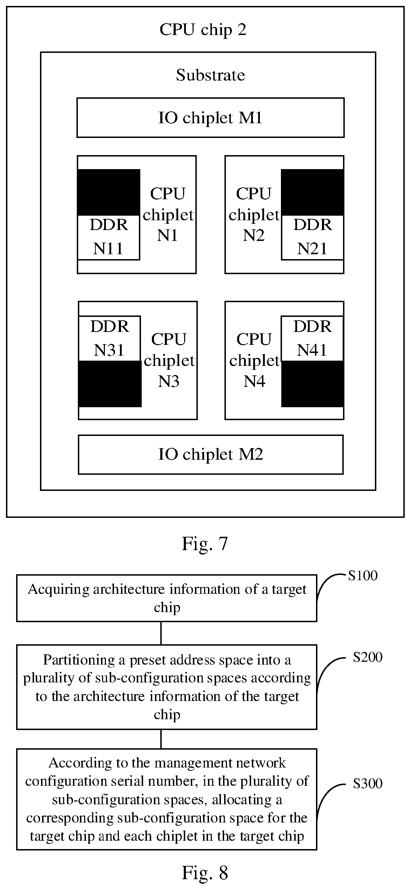

The following description is made by taking the CPU chip 1 and the CPU chip 2 shown in Fig. 2 and Fig. 3 as examples. Corresponding to what are shown in Fig. 2 and Fig. 3, Fig. 6 and Fig. 7 illustrate schematic diagrams of internal structures of the CPU chip 1 and the CPU chip 2, respectively. As shown in Fig. 6, in the CPU chip 1 having 32 cores, CPU chiplet n1 and CPU chiplet n2 are both configured with 2 groups of double date rate (DDR) controllers and each group includes at least one DDR controller, that is, the CPU chip 1 is configured with 4 groups of DDR controllers in total. As shown in Fig. 7, in the CPU chip 2 having 64 cores, CPU chiplet N1, CPU chiplet N2, CPU chiplet N3 and CPU chiplet N4 are all configured with 1 group of DDR controller, that is, the CPU chip 2 is configured with 4 groups of DDR controllers in total.

As can be seen, the CPU chip 1 and the CPU chip 2 that have different product specifications are both configured with 4 groups of DDR controllers. However, since the quantities of CPU chiplets packaged in the CPU chip 1 and the CPU chip 2 are different, and the DDR controllers configured in the packaged CPU chiplets are also different, in the case where the manufacturer predesign the address space allocation and routes in the chiplets based on the hardware specifications, the address spaces configured for the 4 DDR controllers in the CPU chip 1 and the address spaces configured for the 4 groups of DDR controllers in the CPU chip 2 are different. During later use and development of the CPU chip 1 and the CPU chip 2, different software systems are needed to match the CPU chip 1 and the CPU chip 2, and the requirement on the adaptability of software is improved.

In view of this, an embodiment of the present disclosure proposes an improved solution in which a chip and each chiplet in the chip, based on a preset address space, are correspondingly allocated with sub-configuration spaces, so that a plurality of chiplets in the chip can share the preset address space. Thus, the preset address space can be applied to chiplet groups that have different types of chiplets, and also applied to chiplet groups that have different specifications of chiplets. Accordingly, there is no need to match address spaces with the chiplets in the chiplet group based on specific software. The applicability of the solution is effectively improved, and the requirement of a target chip on the adaptability of software is reduced.

Based on the aforesaid idea, as an optional implementation, an embodiment of the present disclosure provides a chip management network configuration method. In a plurality of sub-configuration spaces into which a preset address space is partitioned, a corresponding sub-configuration space is allocated for a chiplet, so that a plurality of chiplets in a target chip share the preset address space. Thus, the preset address space can be applied to chiplet groups that have different types of chiplets. Meanwhile, on the basis that the sub-configuration spaces allocated for modules included in the chiplets are different, the preset address space of the present disclosure can also be applied to chiplet groups that have different specifications of chiplets, e.g., a chiplet group constituting a 32-core CPU or a chiplet group constituting a 64-core CPU. Thus, the preset address space in the embodiments of the present disclosure may be understood as a shared and uniformly configured address space, which is provided by a software system for the chiplets in the chiplet group. Accordingly, there is no need to match address spaces with the chiplets in the chiplet group based on specific software, so that the applicability of the present disclosure is improved and the requirement of the target chip on the adaptability of software is reduced.

Fig. 8 exemplarily illustrates an optional flowchart diagram of a chip management network configuration method according to an embodiment of the present disclosure. As shown in Fig. 8, the following steps may be included.

Step S100: acquiring architecture information of a target chip.

The target chip is any chip predesigned for implementing expected functionality. The target chip includes a plurality of chiplets of different types. A chiplet of the plurality of chiplets includes one or more modules and is configured with a management network configuration serial number, the management network configuration serial number is obtained by configuration based on a type of the chiplet and a packaging position of the chiplet in the target chip.

The architecture information of the target chip includes at least the management network configuration serial number configured for the chiplet. The management network configuration serial number may be obtained by configuration based on the type of the chiplet and the packaging position of the chiplet in the target chip, and be used to, between different chiplets, harmonize and identify data packets or a routing rule and an interconnection relationship in a connecting process.

Step S200: partitioning a preset address space into a plurality of sub-configuration spaces according to the architecture information of the target chip.

The preset address space may be understood as an address range that is preset and can meet address space configuration requirements of target chips of different specifications. By acquiring the architecture information of the target chip, the preset address space can be partitioned into a plurality of sub-configuration spaces according to the architecture information of the target chip, so as to implement that the target chip and each chiplet in the target chip are allocated with corresponding addresses.

Step S300: according to the management network configuration serial number, in the plurality of sub-configuration spaces, allocating a corresponding sub-configuration space for the target chip and each chiplet in the target chip.

The sub-configuration spaces allocated for modules included in each chiplet are different.

It will be understood that the management network configuration serial numbers in the embodiment of the present disclosure are obtained by configuration based on the types of the chiplets and the packaging positions of the chiplets in the target chip and thus correspond to different chiplets. In the case where different packaging positions are set in the target chip, the management network configuration serial numbers of different chiplets are different. Thus, while according to the management network configuration serial number, in the plurality of sub-configuration spaces, corresponding sub-configuration spaces are allocated for the target chip and each chiplet in the target chip, the plurality of chiplets in the target chip can be allowed to share the preset address space, so that the preset address space can be applied to chiplet groups having different types of chiplets. Meanwhile, on the basis that the sub-configuration spaces allocated for the modules included in each chiplet are different, the sub-configuration spaces into which the preset address space is partitioned in the present disclosure can be also applied to chiplet groups having different specifications of chiplets, e.g., a chiplet group constituting a 32-core CPU or a chiplet group constituting a 64-core CPU. Thus, the preset address space in the embodiment of the present disclosure may be understood as a shared and uniformly configured address space, which is provided by a software system for the chiplets in the chiplet group. Accordingly, there is no need to match address spaces with the chiplets in the chiplet group based on specific software, so that the applicability of the present disclosure is improved and the requirement of the target chip on the adaptability of software is reduced.

In some embodiments, in order to organize and manage internal memory and effectively utilize I/O resources, the configuration space allocation of the target chip can meet certain rule requirements. Thus, in a case where different target chips correspond to corresponding architecture information, a preset rule associated with the address space of each chiplet in the target chip can be set based on the architecture information. As an optional implementation, when the preset address space is partitioned into a plurality of sub-configuration spaces according to the architecture information of the target chip, specifically, the preset address space may be partitioned into a plurality of sub-configuration spaces that meet the preset rule according to the architecture information of the target chip.

Corresponding to the content of the architecture information of the target chip, in an optional example, based on the architecture information of the target chip, the preset rule that is set to be associated with the address space of each chiplet in the target chip may include: chiplets of different types corresponding to different address spaces, and modules included in a chiplet corresponding to different address spaces. In other word, when management network configuration is performed for the target chip, it needs to meet that the address space configured for any module of any chiplet has no intersection.

In some examples, in order to ensure that the designed system fully utilizes resources while the functional requirements and the expected performance can be met, the architecture information of the target chip may further include a type of the target chip. For example, the target chip is a 32-core CPU chip or a 64-core CPU chip.

Thus, based on the content of the architecture information of the target chip, when the preset address space is partitioned into a plurality of sub-configuration spaces that meet the preset rule according to the architecture information of the target chip, the preset address space may be firstly partitioned into a plurality of configuration spaces according to the type of the target chip, and different configuration spaces correspond to different function implementations of the target chip. Then, a corresponding configuration space is partitioned into a plurality of sub-configuration spaces according to a quantity of cores of the target chip, a type and a quantity of chiplets constituting the target chip, and a quantity and a functionality of modules comprised in each chiplet in the target chip.

It needs to be explained that the target chip includes a plurality of functional units, and in order to enable a software system to formulate hardware behaviors according to the environment of the target chip, and enable the preset address space to meet the configuration requirements of different types of target chips to provide higher performance and adaptability, the preset address space may be partitioned into a plurality of configuration spaces based on the type of the target chip, thereby achieving the purpose of managing and optimizing the target chip. Moreover, each chiplet of the target chip may be configured with a corresponding module so as to dynamically decide the enabled parts of the chiplet and complete the collaborative work of different modules and different chiplets. Therefore, in order to prevent mutual interference between the functional units of the target chip, the configuration requirements of the target chips of different specifications are met. To improve the resource management efficiency of the chip and guarantee the flexibility and reliability of chip management network configuration, the configuration spaces partitioned corresponding to the functional implementations of the target chip may be further partitioned into a plurality of sub-configuration spaces.

In an optional example, corresponding to different functional implementations of the target chip, the plurality of configuration spaces into which the preset address space is partitioned may include at least a core configuration space, a system management configuration space, and an IO management configuration space.

The core configuration space corresponds to core task execution of the target chip. The system management configuration space corresponds to state control of the target chip. The IO management configuration space corresponds to information interaction of the target chip.

In another optional example, in addition to the core configuration space, the system management configuration space and the IO management configuration space into which the preset address space is partitioned, the plurality of configuration spaces into which the preset address space is partitioned may further include a reserved address space. The reserved address space is used to adapt to address extension requirements of target chips of different specifications, or meet different address extension requirements of the target chip.

It needs to be explained that the preset address space of the present disclosure can meet the address space configuration requirements of chips of different specifications, and therefore, the address range of the preset address space is greater than the required address range of the target chip. Thus, when the preset address space is partitioned into a plurality of configuration spaces, the reserved address space may be correspondingly partitioned from the preset address space, to meet the address extension requirements of target chips of different specifications.

In some embodiments, based on a type of configuration space division, the sub-configuration spaces may include a sub-core configuration space, a sub-system configuration space, and a sub-IO configuration space.

Thus, when a corresponding configuration space is partitioned into the plurality of sub-configuration spaces according to a quantity of cores of the target chip, a type and a quantity of chiplets constituting the target chip, and a quantity and a functionality of modules comprised in each chiplet in the target chip, specifically, the core configuration space may be partitioned into a plurality of corresponding sub-core configuration spaces according to the quantity of the cores of the target chip, where a quantity of the partitioned sub-core configuration spaces may be greater than or equal to the quantity of the cores of the target chip; the system management configuration space may be partitioned into a plurality of corresponding sub-system configuration spaces according to the type and the quantity of the chiplets constituting the target chip, where a quantity of the partitioned sub-system configuration spaces may be greater than or equal to a quantity of chiplets included in the target chip; and the IO management configuration space may be partitioned into a plurality of corresponding sub-IO configuration spaces according to the quantity and the functionality of the modules included in each chiplet in the target chip, where a quantity of the partitioned sub-IO configuration spaces may be greater than or equal to a sum of the quantity of the modules included in each chiplet in the target chip.

It needs to be explained that the preset address space of the present disclosure can meet the address space configuration requirements of chips of different specifications, and therefore, when the corresponding configuration space is partitioned into the plurality of sub-configuration spaces, the quantity of the obtained configuration spaces and the quantity of obtained sub-configuration spaces may be greater than or equal to the quantity of corresponding division conditions, so as to meet different address extension requirements of the target chip. Moreover, after the sub-configuration spaces are allocated for the corresponding cores of the target chip, the chiplets included in the target chip and the modules included in each chiplet in the target chip based on corresponding conditions, the remaining sub-configuration space may be used as the reserved address space.

**In** some embodiments, based on the division of classification of the sub-configuration spaces, when in the plurality of sub-configuration spaces, corresponding sub-configuration spaces are allocated for the target chip and each chiplet in the target chip according to the management network configuration serial numbers, specifically, according to the management network configuration serial numbers, in the plurality of sub-core configuration spaces, a sub-core configuration space may be allocated for the target chip based on the quantity of the cores of the target chip; in the plurality of sub-system configuration spaces, system management sub-configuration space may be allocated for the chiplets of the target chip based on the type and the quantity of the chiplets of the target chip; and the plurality of Sub-IO configuration spaces, Sub-IO configuration spaces may be allocated for the modules included in the chiplets based on the quantity and the functionality of the modules included in the chiplets in the target chip.

In some embodiments, in order to perform data transmission in the target chip and achieve the expected functionality of the target chip, the architecture information of the target chip may further include a routing table. The routing table includes routing information used for indicating routing units in the target chip, and the routing information is configured to formulate a data transmission path corresponding to the modules included in the chiplets in the target chip.

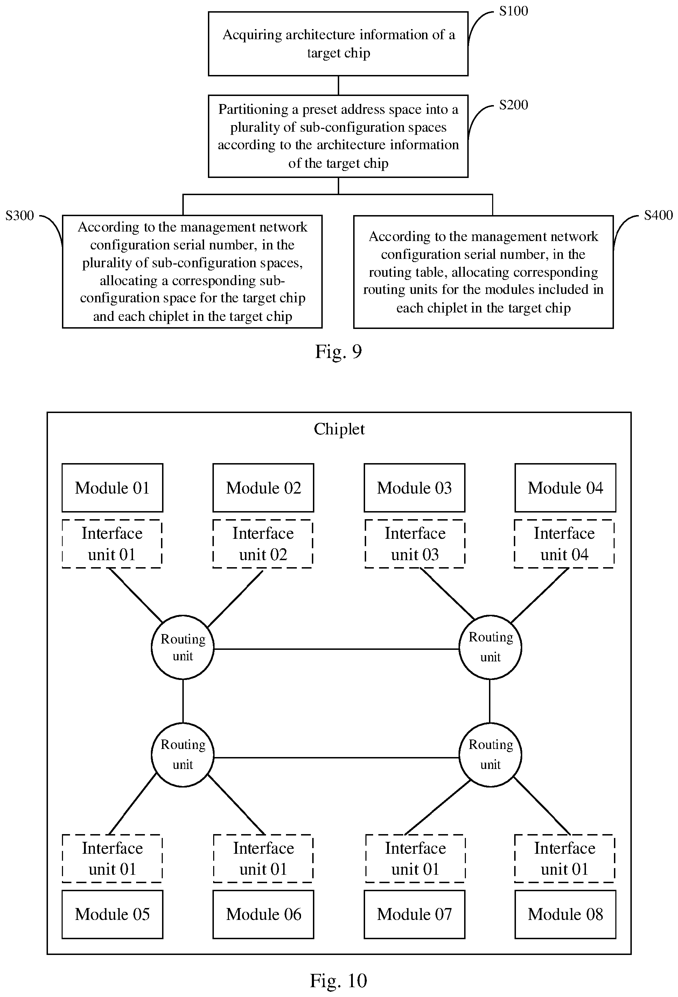

Therefore, when management network configuration is performed for the target chip, corresponding route configuration also needs to be performed. Fig. 9 is another optional flowchart diagram of a chip management network configuration method provided by an embodiment of the present disclosure. While the step S300 is performed, the step S400 may be further performed, that is, in the routing table, corresponding routing units are allocated for the modules included in the each chiplet in the target chip according to the management network configuration serial number.

It needs to be explained that the routing unit may be a static route (i.e., when a data packet is sent, the routing unit may directly forward the data packet according to a preset path), or may be a dynamic route (i.e., a route obtained by dynamical calculation according to a change of network state). A route selection manner of the corresponding routing table may be source routing, distributed routing, etc., which will not be limited in the embodiments of the present disclosure.

In some embodiments, based on communication and collaboration between the modules included in the chiplets in the target chip, the target chip may further include interface units configured corresponding to the modules included in each chiplet. The interface units are configured for communication maintenance of corresponding modules. For example, Fig. 10 illustrates a schematic diagram of an internal structure of a chiplet. The chiplet includes the module 01 to the module 08, a total of 8 modules, and the module is configured correspondingly with an interface unit, which is the interface unit 01, the interface unit 02, the interface unit 03, and so on to the interface unit 08. Moreover, based on the function of the interface units, the interface units of each module can be connected to a corresponding routing unit to transmit corresponding communication information through the information transmission path formulated by the routing units. The communication information may be address space information configured for the module.

Correspondingly, while according to the management network configuration serial number, in the routing table, a corresponding routing unit is allocated for the modules included in each chiplet in the target chip, simultaneously, a corresponding interface unit may be allocated for the modules included in each chiplet in the target chip.

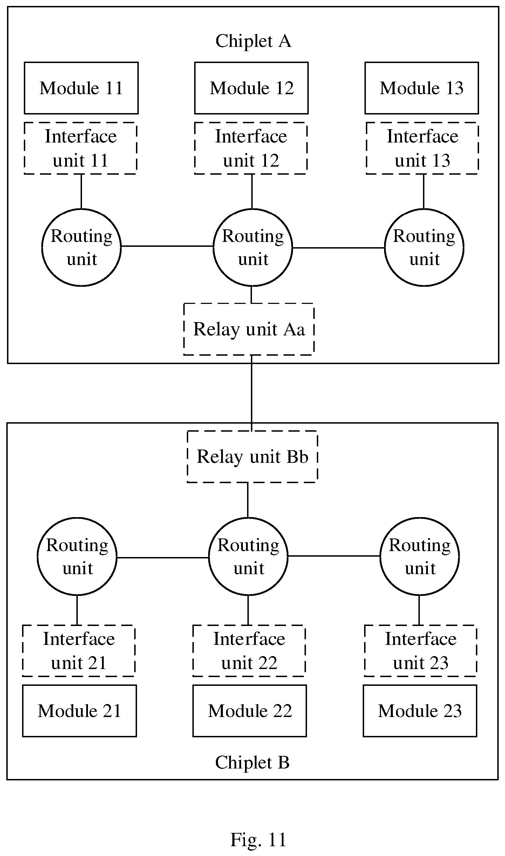

In some embodiments, based on communication and collaboration between different chiplets in the target chip, the target chip may further include relay units configured for each chiplet in the target chip. The relay units are configured for signal transmission between a chiplet and a peer chiplet. In Fig. 11 which illustrated a schematic diagram of an interconnection structure of different chiplets, both chiplet A and chiplet B are provided with the relay units (relay unit Aa and relay unit Bb, respectively). The chiplet A establishes transmission through the relay unit Aa of the chiplet A and the relay unit Bb of the chiplet B, and communicates with the chiplet B. For the configuration of a relay unit, taking the chiplet A as an example, the relay unit Aa can be connected to the routing unit of the chiplet A and then correspondingly connected to the interface unit, so as to send the corresponding communication information transmitted by the chiplet B to the corresponding module of the chiplet A. The communication information is, for example, a data signal transmitted between the chiplet A and the chiplet B.

Correspondingly, while according to the management network configuration serial number, in the routing table, a corresponding routing unit is allocated for the modules included in each chiplet in the target chip, simultaneously, corresponding relay units may also be allocated for the modules included in the chiplets in the target chip.

It needs to be explained that the interface units and the relay units in the target chip may be set according to actual design requirements. When the communication protocol of the module is simple, no corresponding interface unit may be configured for each modules. When the data transmitted between the chiplets is simple, no corresponding relay unit may be configured for each chiplet, which will not be limited in the embodiments of the present disclosure.

For ease of understanding the chip management network configuration method of the embodiment of the present disclosure, the chip management network configuration method of the embodiments of the present disclosure is explained by taking a 32-core CPU chip and a 64-core CPU chip as target chips. A preset address space of a CPU chip may be preset to 64 MB, so as to allocate corresponding address spaces for the 32-core CPU chip and the 64-core CPU chip.

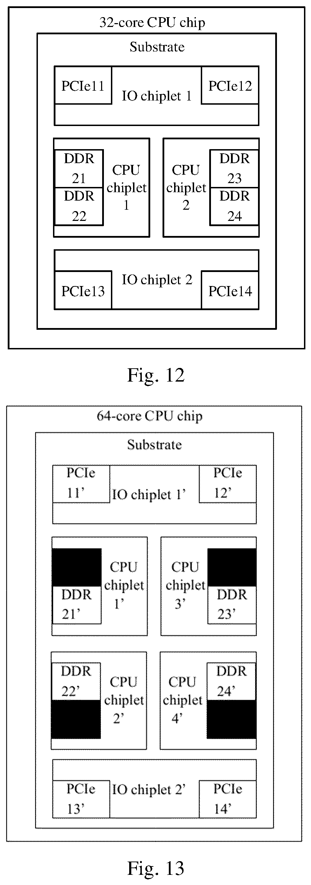

Fig. 12 exemplarily illustrates a schematic diagram of an optional internal structure of the 32-core CPU chip. As show in Fig. 12, the 32-core CPU chip includes the IO chiplet 1, the IO chiplet 2, the CPU chiplet 1, and the CPU chiplet 2. Moreover, the IO chiplet 1 and the IO chiplet 2 both include 2 PCIe modules (shown in Fig. 12 as the PCIe11, the PCIe12, the PCIe13, and the PCIe14), and the CPU chiplet 1 and the CPU chiplet 2 both include 2 DDR modules (shown in Fig. 12 as the DDR21, the DDR22, the DDR23, and the DDR24).

Fig. 13 exemplarily illustrates a schematic diagram of an optional internal structure of the 64-core CPU chip. As shown in Fig. 13, the 64-core CPU chip includes the IO chiplet 1', the IO chiplet 2', the CPU chiplet 1', the CPU chiplet 2', the CPU chiplet 3', and the CPU chiplet 4'. Moreover, the IO chiplet 1' and the IO chiplet 2' both include 2 PCIe modules (shown in Fig. 13 as the PCIe11', the PCIe12', the PCIe13', and the PCIe14'), and the CPU chiplet 1 to the CPU chiplet 4 each include 1 DDR module (shown in Fig. 13 as the DDR21', the DDR22', the DDR23', and the DDR24').

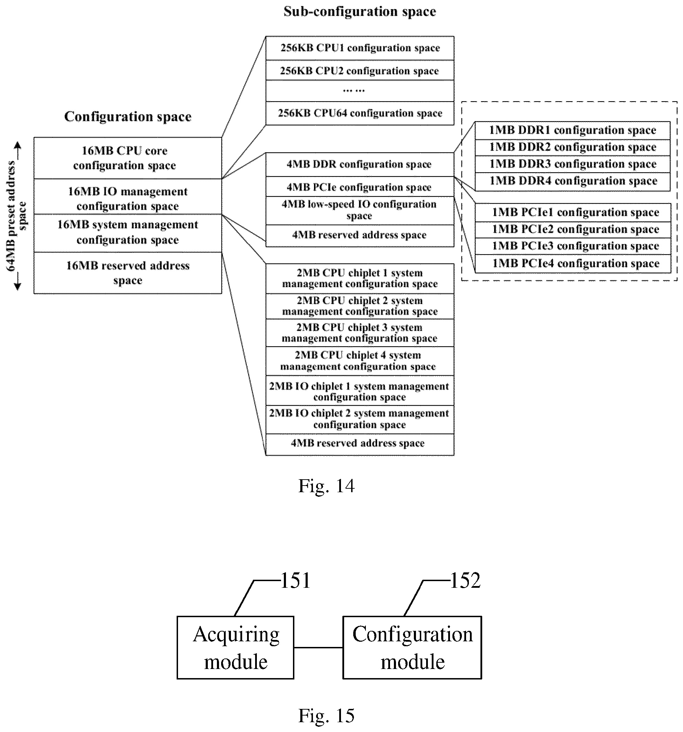

Fig. 14 is a schematic diagram of division of a 64 MB preset address space.

In response to the target chip being the 64-core CPU chip shown in Fig. 13, according to the type of the 64-core CPU chip, the 64 MB preset address space may be firstly partitioned into a 16 MB CPU core configuration space, a 16 MB IO management configuration space, and a 16 MB system management configuration space. The 64 MB preset address space has remaining 16 MB address space unallocated, which may be used as the reserved address space for use when needed.

Secondly, on the basis that the quantity of cores of the 64-core CPU chip is 64, the 16 MB CPU core configuration space may be partitioned into 64 256 KB sub-core configuration spaces (shown in Fig. 14 as the 256 KB CPU1 configuration space, the 256 KB CPU2 configuration space, ..., and the 256 KB CPU64 configuration space).

Based on the type and the quantity of chiplets constituting the 64-core CPU chip, the 16 MB system management configuration space may be partitioned into four 2 MB CPU chiplet system management configuration spaces (shown in Fig. 14 as the 2 MB CPU chiplet 1 system management configuration space to the 2 MB CPU chiplet 4 system management configuration space) and two 2 MB IO chiplet system management configuration spaces (shown in Fig. 14 as the 2 MB IO chiplet 1 system management configuration space and the 2 MB IO chiplet 2 system management configuration space). The 16 MB system management configuration space has remaining 4 MB address space unallocated, which can be used as the reserved address space for use when needed.

On the basis that in the 64-core CPU chip, each CPU chiplet includes a DDR module and each IO chiplet includes two PCIe modules, the 16 MB IO management configuration space may be partitioned into a 4 MB DDR configuration space and a 4 MB PCIe configuration space. The 4 MB DDR configuration space may be specifically partitioned in to four 1MB DDR configuration spaces (shown in Fig. 14 as the 1MB DDR1 configuration space to the 1MB DDR4 configuration space). The 4 MB PCIe configuration space may be specifically partitioned into four 1 MB PCIe configuration spaces (shown in Fig. 14 as the 1 MB PCIe1 configuration space to the 1 MB PCIe4 configuration space).

It needs to be explained that since a CPU chip inevitably needs to use low-speed IO, in order to implement the use of low-speed IO by the 64-core CPU chip, when the 16 MB IO management configuration space is partitioned, a low-speed IO configuration space needs to be partitioned from the 16 MB IO management configuration space, and the capacity of the low-speed IO configuration space may be 4 MB.

The 16 MB IO management configuration space has remaining 4 MB address space unallocated, which can be used as the reserved address space for use when needed.

Similarly, in response to the target chip being the 32-core CPU chip shown in Fig. 12, the 16 MB preset address space may be partitioned with reference to Fig. 14. On the basis that the quantity of cores of the 32-core CPU chip is 32, the 16 MB CPU core configuration space may be partitioned into thirty-two 256 KB sub-core configuration spaces (the 256 KB CPU1 configuration space to the 256 KB CPU32 configuration space). In this case, the 16MB preset address space has remaining 8 MB address space unallocated, and the 8 MB can be used as the reserved address space for use when needed, e.g., when the CPU core configuration space is allocated for the 64-core CPU.

Based on the schematic diagram of division of Fig. 14, when the corresponding sub-configuration spaces are allocated for the target chip and each chiplet in the target chip according to the management network configuration serial numbers, in response to the target chip being the 64-core CPU chip shown in Fig. 13, in the 64-core CPU, the management network configuration serial number of the CPU chiplet 1' is set to 1 through substrate connection. Here, the quantity of the cores correspondingly provided by one CPU chiplet is 16, then the core configuration space configured for the CPU chiplet 1' is the 256 KB CPU1 configuration space to the 256 KB CPU16 configuration space, and the system management configuration space is the 2 MB CPU chiplet 1 system management configuration space; the corresponding CPU chiplet 1' includes therein a DDR21' module, and then the IO management configuration space configured for the DDR21' module in the CPU chiplet 1' is the 1 MB DDR1 configuration space.

In the 64-core CPU, the management network configuration serial number of the CPU chiplet 2' is set to 2 through substrate connection, then the core configuration space configured for the CPU chiplet 2' is the 256 KB CPU17 configuration space to the 256 KB CPU32 configuration space, and the system management configuration space is the 2 MB CPU chiplet 2 system management configuration space; the corresponding CPU chiplet 2' includes a DDR22' module, and then the IO management configuration space configured for the DDR22' module in the CPU chiplet 2' is the 1 MB DDR2 configuration space.

In the 64-core CPU, the management network configuration serial number of the CPU chiplet 3' is set to 3 through substrate connection, then the core configuration space configured for the CPU chiplet 3' is the 256 KB CPU33 configuration space to the 256 KB CPU48 configuration space, and the system management configuration space is a 2 MB CPU chiplet 3 system management configuration space; the corresponding CPU chiplet 3' includes a DDR23' module, and the IO management configuration space configured for the DDR23' module in the CPU chiplet 3' is a 1 MB DDR3 configuration space.

In the 64-core CPU, the management network configuration serial number of the CPU chiplet 4' is set to 4 through substrate connection, then the core configuration space configured for the CPU chiplet 4' is a 256 KB CPU49 configuration space to a 256 KB CPU64 configuration space, and the system management configuration space is a 2 MB CPU chiplet 4 system management configuration space; the corresponding CPU chiplet 4' includes therein a DDR24' module, and the IO management configuration space configured for the DDR24' module in the CPU chiplet 4' is a 1 MB DDR4 configuration space.

It needs to be explained that since the 64-core CPU chip needs to use low-speed IO, in order to implement the use of low-speed IO by the 64-core CPU chip, when the IO management configuration space is configured for the CPU chiplet, the 4 MB low-speed IO configuration space may be allocated for any CPU chiplet, e.g., the CPU chiplet 1', in the 64-core CPU chip.

Similarly, in response to the target chip being the 32-core CPU chip shown in Fig. 12, in the 32-core CPU, the management network configuration serial number of the CPU chiplet 1 is set to 11 through substrate connection. The quantity of the cores correspondingly provided by one CPU chiplet is 16, then the core configuration space configured for the CPU chiplet 1 is a 256 KB CPU1 configuration space to a 256 KB CPU16 configuration space, and the system management configuration space is a 2 MB CPU chiplet 1 system management configuration space; the corresponding CPU chiplet 1 includes therein a DDR21 module and a DDR22 module, then the IO management configuration spaces respectively configured for the DDR21 module and the DDR22 module in the CPU chiplet 1 are a 1 MB DDR1 configuration space and a 1 MB DDR2 configuration space.

In the 32-core CPU, the management network configuration serial number of the CPU chiplet 2 is set to 22 through substrate connection, then the core configuration space configured for the CPU chiplet 2 is a 256 KB CPU17 configuration space to a 256 KB CPU32 configuration space, and the system management configuration space is a 2 MB CPU chiplet 2 system management configuration space; the corresponding CPU chiplet 2 includes therein a DDR23 module and a DDR24 module, and the IO management configuration spaces respectively configured for the DDR23 module and the DDR24 module in the CPU chiplet 2 are a 1 MB DDR3 configuration space and a 1 MB DDR4 configuration space.

It needs to be explained that since the 32-core CPU chip needs to use low-speed IO, in order to implement the use of low-speed IO by the 32-core CPU chip, when the IO management configuration space is configured for the CPU chiplet, the 4 MB low-speed IO configuration space may be allocated for any CPU chiplet, e.g., the CPU chiplet 1, in the 32-core CPU chip.

Moreover, when management network configuration is performed for the CPU chip based on the management network configuration serial numbers, each interface module included in each chiplet in the CPU chip may correspondingly acquire a management network configuration serial number, so that the interface module selects a route configuration space and a routing table according to the management network configuration serial number, where the manner of routing may be source routing or distributed routing.

As can be seen, according to the chip management network configuration method of the embodiments of the present disclosure, in a plurality of sub-configuration spaces into which a preset address space is partitioned, a corresponding sub-configuration space is allocated for a chiplet, so that a plurality of chiplets in a target chip share the preset address space. Thus, the preset address space can be applied to chiplet groups having different types of chiplets. Meanwhile, on the basis that sub-configuration spaces allocated for modules included in each chiplets are different, the configuration spaces can be applied to chiplet groups of chiplets having different specifications, e.g., a chiplet group constituting a 32-core CPU or a chiplet group constituting a 64-core CPU. Thus, a preset address space provided for a software system can be understood as a space that is shared by chiplets in a chiplet group and has a uniform configuration, and there is no need to configure specific software to match the space, thereby improving the applicability and reducing the requirement of the obtained target chip on the adaptability of software.

An embodiment of the present disclosure further provides a chip management network system. The chip management network system can be applied to a target chip. The target chip may include a plurality of chiplets of different types. Each chiplet of the plurality of chiplets includes one or more modules and is configured with a management network configuration serial number. The management network configuration serial number is configured based on a type of the chiplet and a packaging position of the chiplet in the target chip. In an optional implementation, in combination with the foregoing description, Fig. 15 exemplarily illustrates a schematic diagram of an optional structure of a chip management network system provided by an embodiment of the present disclosure. The chip management network system may include an acquiring module 151 and a configuration module 152. The functionalities and the refined structures of the acquiring module and the configuration module may be as described as in the above corresponding parts.

The acquiring module 151 is configured to acquire architecture information of the target chip. The architecture information includes at least the management network configuration serial number configured for the chiplet.

The configuration module 152 is configured to partition a preset address space into a plurality of sub-configuration spaces according to the architecture information of the target chip; and according to the management network configuration serial number, in the plurality of sub-configuration spaces, allocate a corresponding sub-configuration space for the target chip and each chiplet in the target chip, where sub-configuration spaces allocated for modules included in each chiplet are different.

Optionally, the configuration module 152 is configured to partition a preset address space into a plurality of sub-configuration spaces according to the architecture information of the target chip, specifically: according to the architecture information of the target chip, partition the preset address space into a plurality of sub-configuration spaces that meet a preset rule, where the preset rule is associated with an address space of each chiplet in the target chip.

Optionally, the preset rule includes:
chiplets of different types correspond to different address spaces, and modules included in a chiplet correspond to different address spaces.

Optionally, the architecture information of the target chip that acquired by the acquiring module 151 further includes a type of the target chip; and
The configuration module 152 is configured to, according to the architecture information of the target chip, partition the preset address space into a plurality of sub-configuration spaces that meet a preset rule, which includes:
partitioning the preset address space into a plurality of configuration spaces according to the type of the target chip, where different configuration spaces correspond to different functionality implementations of the target chip; and
according to a quantity of cores of the target chip, a type and a quantity of chiplets constituting the target chip, and a quantity and a functionality of modules included in each chiplet in the target chip, partitioning a corresponding configuration space into the plurality of sub-configuration spaces.

Optionally, the plurality of configuration spaces include at least a core configuration space, a system management configuration space, and an IO management configuration space;
the core configuration space corresponds to core task execution of the target chip; the system management configuration space corresponds to state control of the target chip; and the IO management configuration space corresponds to information interaction of the target chip.

Optionally, the sub-configuration spaces include a sub-core configuration space, a sub-system configuration space, and a sub-IO configuration space;
the configuration module 152 is configured to, according to a quantity of cores of the target chip, a type and a quantity of chiplets constituting the target chip, and a quantity and a functionality of modules included in each chiplet in the target chip, partition a corresponding configuration space into the plurality of sub-configuration spaces, which includes:
according to the quantity of cores of the target chip, partitioning the core configuration space into a plurality of corresponding sub-core configuration spaces, where a quantity of the partitioned sub-core configuration spaces is greater than or equal to the quantity of cores of the target chip;
according to the type and the quantity of the chiplets constituting the target chip, partitioning the system management configuration space into a plurality of corresponding sub-system configuration spaces, where a quantity of the partitioned sub-system configuration spaces is greater than or equal to a quantity of chiplets included in the target chip; and
according to the quantity and the functionality of the modules included in each chiplet in the target chip, partitioning the IO management configuration space into a plurality of corresponding sub-IO configuration spaces, where a quantity of the partitioned sub-IO configuration spaces is greater than or equal to a sum of the quantity of the modules included in each chiplet in the target chip.

Optionally, the configuration module 152 is configured to, according to the management network configuration serial number, in the plurality of sub-configuration spaces, allocate a corresponding sub-configuration space for the target chip and each chiplet in the target chip, which includes:
according to the management network configuration serial numbers, in the plurality of sub-core configuration spaces, allocating the sub-core configuration spaces for the target chip based on the quantity of cores of the target chip;
in the plurality of sub-system configuration spaces, allocating the sub-system configuration spaces for the chiplet of the target chip based on the type and the quantity of the chiplets of the target chip; and
in the plurality of sub-IO configuration spaces, allocating the sub-IO configuration spaces for the modules included in each chiplet based on the quantity and the functionality of the modules included in each chiplet in the target chip.

Optionally, the configuration spaces obtained when the configuration module 152 is configured for division further include a reserved address space, and the reserved address space is used to adapt to address extension requirements of target chips of different specifications, or meet different address extension requirements of the target chip.

Optionally, the architecture information of the target chip acquired by the acquiring module 151 further includes a routing table corresponding to the target chip, the routing table is configured to indicate routing information of routing units in the target chip, and the routing information is used to formulate a data transmission path corresponding to the modules included in each chiplet in the target chip; and
while the configuration module 152 is configured to, according to the management network configuration serial number, in the plurality of sub-configuration spaces, allocate a corresponding sub-configuration space for the target chip and each chiplet in the target chip, the method further includes:
according to the management network configuration serial number, in the routing table, allocating a corresponding routing unit for the modules included in each chiplet in the target chip.

Optionally, the target chip further includes interface units configured corresponding to the modules included in each chiplet; the interface units are configured for communication maintenance of corresponding modules; and
while the configuration module 152 is configured to, according to the management network configuration serial number, in the routing table, allocate a corresponding routing unit for the modules included in each chiplet in the target chip, the method further includes: allocating a corresponding interface unit for the modules included in each chiplet in the target chi.

Optionally, the target chip further includes relay units configured for each chiplet in the target chip; the relay units are configured for signal transmission between a chiplet and a peer chiplet; and
while the configuration module 152 is configured to, according to the management network configuration serial number, in the routing table, allocate a corresponding routing unit for the modules included in each chiplet in the target chip, the method further includes: allocating a corresponding relay unit for the modules included in each chiplet in the target chip.

It can be seen that the chip management network configuration system of the embodiment of the present disclosure provides a preset address space for a software system, and the preset address space may be a space that is shared by chiplets in a chiplet group and has a uniform configuration, and there is no need to configure specific software to match the space, thereby improving the applicability and reducing the requirement of the obtained target chip on the adaptability of software.

An embodiment of the present disclosure further provides a computing device, such as a service device or a terminal device. The computing device includes the chip management network system provided by the embodiments of the present disclosure.

An embodiment of the present disclosure further provides a storage medium. The storage medium stores one or more computer executable instructions. When the one or more computer executable instructions are executed, the chip management network configuration method provided by the embodiments of the present disclosure is implemented.

An embodiment of the present disclosure further provides a computer program product. The computer program product includes one or more computer executable instructions. When the one or more computer executable instructions are executed, the chip management network configuration method provided by the embodiments of the present disclosure is implemented.

The above describes a plurality of implementations provided by the embodiments of the present disclosure, and the various alternatives described in each implementation may be combined and cross-referenced without conflict, thereby extending a plurality of possible implementations, which can be regarded as the implementations disclosed in the embodiments of the present disclosure.

Although the embodiments of the present disclosure are disclosed as above, but the present disclosure is not limited to this. Any person skilled in the art may make various changes and modifications without departing from the spirit and scope of the present disclosure, so the scope of protection of the present disclosure shall be subject to the scope limited by the claims.

## Claims

1. A chip management network configuration method, applied to a target chip, wherein the target chip comprises a plurality of chiplets of different types, and a chiplet of the plurality of chiplets comprises one or more modules and is configured with a management network configuration serial number, the management network configuration serial number is obtained by configuration based on a type of the chiplet and a packaging position of the chiplet in the target chip, and the method comprises:
acquiring architecture information of the target chip, wherein the architecture information comprises at least the management network configuration serial number configured for the chiplet;
partitioning a preset address space into a plurality of sub-configuration spaces according to the architecture information of the target chip; and
according to the management network configuration serial number, in the plurality of sub-configuration spaces, allocating a corresponding sub-configuration space for the target chip and each chiplet in the target chip, wherein sub-configuration spaces allocated for modules comprised in each chiplet are different.

2. The method according to claim 1, wherein the partitioning a preset address space into a plurality of sub-configuration spaces according to the architecture information of the target chip, comprises: according to the architecture information of the target chip, partitioning the preset address space into a plurality of sub-configuration spaces that meet a preset rule, wherein the preset rule is associated with an address space of each chiplet in the target chip.

3. The method according to claim 2, wherein the preset rule comprises:
chiplets of different types correspond to different address spaces, and modules comprised in the chiplet correspond to different address spaces.

4. The method according to claim 3, wherein the architecture information of the target chip further comprises a type of the target chip; and
the according to the architecture information of the target chip, partitioning the preset address space into a plurality of sub-configuration spaces that meet a preset rule, comprises:
partitioning the preset address space into a plurality of configuration spaces according to the type of the target chip, wherein different configuration spaces correspond to different functionality implementations of the target chip; and
according to a quantity of cores of the target chip, a type and a quantity of chiplets constituting the target chip, and a quantity and a functionality of modules comprised in each chiplet in the target chip, partitioning a corresponding configuration space into the plurality of sub-configuration spaces.

5. The method according to claim 4, wherein the plurality of configuration spaces comprise at least a core configuration space, a system management configuration space, and an IO management configuration space;
the core configuration space corresponds to core task execution of the target chip; the system management configuration space corresponds to state control of the target chip; and the IO management configuration space corresponds to information interaction of the target chip.

6. The method according to claim 5, wherein the sub-configuration spaces comprise a sub-core configuration space, a sub-system configuration space, and a sub-IO configuration space;
the according to a quantity of cores of the target chip, a type and a quantity of chiplets constituting the target chip, and the type and the quantity of the modules comprised in each chiplet, partitioning a corresponding configuration space into the plurality of sub-configuration spaces, comprises:
according to the quantity of cores of the target chip, partitioning the core configuration space into a plurality of corresponding sub-core configuration spaces, wherein a quantity of the partitioned sub-core configuration spaces is greater than or equal to the quantity of cores of the target chip;
according to the type and the quantity of the chiplets constituting the target chip, partitioning the system management configuration space into a plurality of corresponding sub-system configuration spaces, wherein a quantity of the partitioned sub-system configuration spaces is greater than or equal to a quantity of chiplets comprised in the target chip; and
according to the quantity and the functionality of the modules comprised in each chiplet in the target chip, partitioning the IO management configuration space into a plurality of corresponding sub-IO configuration spaces, wherein a quantity of the partitioned sub-IO configuration spaces is greater than or equal to a sum of the quantity of the modules comprised in each chiplet in the target chip.

7. The method according to claim 6, wherein the according to the management network configuration serial number, in the plurality of sub-configuration spaces, allocating a corresponding sub-configuration space for the target chip and each chiplet in the target chip, comprises:
according to the management network configuration serial number, in the plurality of sub-core configuration spaces, allocating the sub-core configuration spaces for the target chip based on the quantity of cores of the target chip;
in the plurality of sub-system configuration spaces, allocating the sub-system management configuration spaces for the chiplet of the target chip based on the type and the quantity of the chiplets of the target chip; and
in the plurality of sub-IO configuration spaces, allocating the sub-IO configuration spaces for the modules comprised in each chiplet based on the quantity and the functionality of the modules comprised in each chiplet in the target chip.

8. The method according to any one of claims 5 to 7, wherein the configuration spaces further comprise a reserved address space, and the reserved address space is used to adapt to address extension requirements of target chips of different specifications, or meet different address extension requirements of the target chip.

9. The method according to any one of claims 1 to 8, wherein the architecture information of the target chip further comprises a routing table corresponding to the target chip, the routing table is configured to indicate routing information of routing units in the target chip, and the routing information is used to formulate a data transmission path corresponding to the modules comprised in each chiplet in the target chip; and while according to the management network configuration serial number, in the plurality of sub-configuration spaces, allocating a corresponding sub-configuration space for the target chip and each chiplet in the target chip, the method further comprises:
according to the management network configuration serial number, in the routing table, allocating a corresponding routing unit for the modules comprised in each chiplet in the target chip.

10. The method according to any one of claims 1 to 9, wherein the target chip further comprises interface units configured corresponding to the modules comprised in each chiplet; the interface units are configured for communication maintenance of corresponding modules; and
while according to the management network configuration serial number, in the routing table, allocating a corresponding routing unit for the modules comprised in each chiplet in the target chip, the method further comprises: allocating a corresponding interface unit for the modules comprised in each chiplet in the target chip.

11. The method according to any one of claims 1 to 10, wherein the target chip further comprises relay units configured for each chiplet in the target chip, and the relay units are configured for signal transmission between a chiplet and a peer chiplet; and
while according to the management network configuration serial number, in the routing table, allocating a corresponding routing unit for the modules comprised in each chiplet in the target chip, the method further comprises: allocating a corresponding relay unit for the modules comprised in each chiplet in the target chip.

12. A chip management network system, applied to a target chip, wherein the target chip comprises a plurality of chiplets of different types, and a chiplet of the plurality of chiplets comprises one or more modules and is configured with a management network configuration serial number, the management network configuration serial number is obtained by configuration based on a type of the chiplet and a packaging position of the chiplet in the target chip; and the chip management network system comprises:
an acquiring module, configured to acquire architecture information of the target chip, wherein the architecture information comprises at least the management network configuration serial number configured for the chiplet; and
a configuration module, configured to partition a preset address space into a plurality of sub-configuration spaces according to the architecture information of the target chip, and according to the management network configuration serial number, in the plurality of sub-configuration spaces, allocate a corresponding sub-configuration space for the target chip and each chiplet in the target chip, wherein sub-configuration spaces allocated for modules comprised in each chiplet are different.

13. A computing device, comprising the chip management network system according to claim 12.

14. A storage medium, storing one or more computer executable instructions which, when executed, implement the chip management network configuration method according to any one of claims 1 to 11.

15. A computer program product, comprising one or more computer executable instructions which, when executed, implement the chip management network configuration method according to any one of claims 1 to 11.
